(19) Europäisches Patentamt
European Patent Office
Office européen des brevets

(11) Publication number: **0 253 474 A2**

# (12) EUROPEAN PATENT APPLICATION

(21) Application number: 87304501.7

(51) Int. Cl.⁴: C09D 7/00

(22) Date of filing: 20.05.87

(30) Priority: 20.05.86 GB 8612193

(43) Date of publication of application:
20.01.88 Bulletin 88/03

(84) Designated Contracting States:
AT BE CH DE ES FR GB GR IT LI NL SE

(71) Applicant: Coates Brothers PLC
Cray Avenue St. Mary Cray
Orpington Kent BR5 3PP(GB)

(72) Inventor: Johnson, Norman Walter
29 Repton Road
Orpington Kent(GB)

(74) Representative: Lamb, John Baxter et al
MARKS & CLERK 57/60 Lincoln's Inn Fields
London WC2A 3LS(GB)

## (54) Surface coating compositions.

(57) A surface coating composition comprises a film-forming material, a volatile organic solvent and a reactive solvent/diluent which comprises one or more ether-esters of the formula:

$$(R^1-COO)_a-\underset{\displaystyle}{\overset{\displaystyle (OH)_c}{\overset{|}{R}}}-(OCH_2-CH=CH_2)_b$$

in which

R is a polyvalent hydrocarbyl group;

$R^1$ is an ethylenically unsaturated hydrocarbyl group containing from 18 to 24 carbon atoms; and

a, b and c are each integers such that the total of a, b and c is from 3 to 6, a and b are each at least 1 and the total of a and b is at least 3.

EP 0 253 474 A2

# SURFACE COATING COMPOSITIONS

This invention is concerned with improvements in and relating to air-drying surface coating compositions such as decorative paints and varnishes. More particularly, the invention is concerned with surface coating compositions containing reactive solvents and/or diluents.

Liquid surface coating compositions comprising a film-forming material, generally a resinous material, dissolved in an organic solvent are, of course, very well known. The solvents which have been most commonly used are volatile organic solvents so that after a coating composition containing them is applied to a substrate, solvent evaporates to leave a film of coating material which then cures or dries on the substrate. Volatile organic solvents often present environmental problems. Thus, one commonly employed solvent, white spirit, is regarded as potentiously hazardous in view of its relatively high content of aromatic hydrocarbons.

In order to overcome the possible problems associated with such potentially hazardous solvents it has been proposed (a) to replace such solvents by other less toxic solvents, such as the isoparaffinic solvents; or (b) to reduce the overall amount of solvent employed. Proposal (a) suffers from the disadvantages that the proposed replacement solvents are generally weaker solvents than, say, white spirit so that for the same application viscosity the composition will have a reduced solids content which will result in a loss in build and performance. In order to maintain build, lower viscosity resins have to be formulated and evaluated and this can be time-consuming and costly and in many cases is found that final performance is unsatisfactory. Proposal (b), reduction of overall solvent content, results in a product having an increased viscosity and, hence, unacceptable application properties. Again reformulation and evaluation are required with the possibility of unsatisfactory final performance.

One way in which lower toxicity solvents or lower levels of possibly toxic solvents may be employed with known film-forming resins, without adversely affecting solids content or application properties, is to incorporate a reactive diluent in the composition. Such a reactive diluent not evaporate off from the composition, when it has been applied to a substrate, but remains to form part of the film-forming composition.

Examples of reactive diluents which have been proposed for this use are allyl ethers of polyols such as glycerol, trimethylol propane and pentaerythritol. The use of such materials, however, presents additional problems associated with odour or performance (i.e. giving rise to poor dry, poor gloss retention and embrittlement).

It has now been found, in accordance with the present invention, that certain esters of polyhydric alcohols which have been partially etherified with allyl alcohol are useful reactive diluents in that they are generally of low viscosity, are good solvents, are virtually odour-free and do not markedly affect dry or performance of the final composition.

According to the invention, therefore, there is provided a surface coating composition comprising a film-forming material, a volatile organic solvent and a reactive solvent and/or diluent which comprises one or more ether-esters of the formula:

$$(R^1\text{-COO})_a\,\overset{\displaystyle (OH)_c \atop |}{R}\text{---}(OCH_2 - CH = CH_2)_b$$

in which

R is a polyvalent hydrocarbyl group, preferably a polyvalent aliphatic carbyl group;

$R^1$ is an ethylenically unsaturated hydrocarbyl group containing from 18 to 24 carbon atoms; and

a, b and c are each integers such that the total of a, b and c is from 3 to 6, a and b are each at least 1 and the total of a and b is at least 3.

The ether-esters used in the invention may conveniently be prepared by esterifying an appropriate allyl ether of a polyhydric alcohol containing free hydroxyl groups with an appropriate unsaturated acid, or mixture of unsaturated acids, at a temperature of from 200 to 240°C, in the presence or absence of a solvent, the reaction being carried out until a low acid value is obtained.

Suitable polyhydroxy compounds include glycerol, trimethylol propane, pentaerythritol and sorbitol.

Suitable fatty acids include unsaturated aliphatic acids such as oleic, linoleic and linolenic acids. As will be appreciated, compositions in accordance with the invention will most conveniently be prepared from commercially available mixtures of appropriate unsaturated acids (such as tall oil fatty acids and the mixtures of fatty acids derived from soya bean oil and linseed oil). Accordingly, compositions in accordance with the invention will commonly comprise mixtures of esters of various acids and may also contain small proportions of esters of saturated or aromatic carboxylic acids.

The surface coating composition of the invention comprises a film-forming material (such as an alkyd or modified alkyd resin, a urethane oil or an epoxy ester resin), a volatile organic solvent and a reactive solvent and/or diluent composition as defined above. The coating compositions suitably contain from 5 to 30% by weight, preferably from 5 to 15% by weight of the reactive diluent.

In order that the invention may be well understood the following Examples are given by way of illustration only. In the Examples all parts and percentages are by weight unless otherwise stated.

PREPARATIVE EXAMPLE 1

A reactive diluent containing approximately one fatty acid residue and two allyl groups per molecule was prepared as follows. Trimethylol propane diallyl ether (45.6 parts), tall oil fatty acids (54.4 parts) and dibutyl tin oxide (0.03 parts) were charged to a reaction vessel fitted with a stirrer, nitrogen inlet and side arm to allow for distillation of water to a receiver. The temperature was raised to 215°C and held for 7 hours. On cooling the diluent had a viscosity of 0.23 poise and an acid value of 7.0mgKOH/g.

PREPARATIVE EXAMPLE 2

A reactive diluent containing approximately two fatty acids residues and one allyl group per molecule was prepared in a similar manner to that described in Example 1 from trimethylol propane allyl ether (24 parts), tall oil fatty acids (76 parts) and dibutyl tin oxide (0.03 parts). The product had a viscosity of 0.47 poise and an acid vlaue of 12 mgKOH/g.

PREPARATIVE EXAMPLE 3 (Comparative)

A reactive diluent containing approximately one fatty acid residue and one allyl group per molecule was prepared following the procedure of Example 1 from trimethylol propane mono allyl ether (38.7 parts) tall oil fatty acids (61.3 parts) and dibutyl tin oxide (0.03 parts). The product had a viscosity of 0.47 poise and an acid value of 12 mgKOH/g.

PREPARATIVE EXAMPLE 3 (Comparative)

A reactive diluent containing approximately one fatty acid residue and one allyl group per molecule was proposed following the procedure of Example 1 from trimethylol propane mono allyl ether (38.7 parts) tall oil fatty acids (61.3 parts) and dibutyl tin oxide (0.03 parts). The product had a viscosity of 0.59 poise and an acid value of 8.4 mgKOH/g.

PREPARATIVE EXAMPLE 4 (Comparative)

A reactive diluent containing approximately one fatty acid residue and one allyl group per molecule was prepared from allyl glycidyl ether (28.9 parts) and tall oil fatty acids (71 parts) by reaction at 160°C in the presence of an epoxy acid catalyst. The product had a viscosity of 0.55 poise and an acid value of 12.2 mgKOH/g.

The products of Preparative Examples 1-4 were tested as follows.

TEST 1

This test illustrates how the reactive diluents may be used to maintain the solids content and viscosity of a commercially available type of alkyd composition (Syn 60W made by Cray Valley Products Limited), when the normal solvent (white spirit) is replaced by a less toxic but weaker solvent (Shellsol TD). Only products containing two allyl ether groups or two fatty acid groups/mole gave acceptable dry.

Thus, compositions were made up comprising the alkyd resin (Syn 60W), solvent (Shellsol TD), diluent, and a drier solution comprising cobalt, zirconium and calcium to give a composition having a viscosity of 2 poise. (The solids content of the composition at this viscosity was noted). The composition were then applied to substrates and evaluated. By way of comparison, similar compositions were made comprising white spirit as solvent, Shellsol TD only as solvent and Shellsol together with trimethylolpropane diallyl ether as diluent.

The results are shown in Table 1.

**Table 1**

| Solvent | Diluent | % | Solids content 2 poise (%) | B.K. Dry at 20°C (Hrs) (a), (b), (c) (d) | Drying |
|---|---|---|---|---|---|
| R129 | - | - | 53 | 1 2 7 >24 | Satisfactory |
| Shellsol TD | - | - | 47 | 1 1¾ 6 > 24 | Satisfactory |
| " | Ex1 | 10 | 53.2 | 1¼ 2 10 >24 | Satisfactory |
| " | Ex2 | 13 | 53.4 | 1¼ 2¼ 12 >24 | Satisfactory |
| " | Ex3 | 12 | 53.1 | 1½ 4½ >24 | sl. tacky film O.N. |
| " | Ex4 | 12 | 53.5 | 2 5 >24 | tacky film O.N. |
| " | T.M.P.D.E. | 9 | 53.3 | 1¼ 2 8½ >24 | Satisfactory dry Unacceptable odour |

In Table 1, the results under the heading "B.K. dry" refers to results obtained by the Beck Koller dry test;
the figures under (a) indicating the time taken for solvent loss, those under (b) the time at which the coating was touch dry, those under (c) the time at which the coating was hard dry and those under (d) the time at which the coating film was fully oxidised.

Test 2

This test demonstates how the reactive diluents can be used with an alkyd thinned in white spirit to give higher solids system of reduced solvent toxicity. The same alkyd as used in Test 1 was employed.

The results of the tests, which were carried out in a similar manner to Test 1, are shown in Table 2.

**Table 2**

| Diluent | % | Initial Viscosity (p) | Solids at 2p | BK Recorder at 20ºC HRS (a) | (b) | (c) | (d) |
|---|---|---|---|---|---|---|---|
| Ex1 | 10 | 13.8 | 59 | 1¼ | 2 | 12 | > 24 |
| Ex1 | 20 | 17.1 | 67 | 1½ | 3 | 18 | > 24 |
| Ex2 | 10 | 8.3 | 58.3 | 1½ | 3 | 12 | > 24 |
| Ex2 | 20 | 9.8 | 65.5 | 1½ | 3 | 20 | > 24 |
| - | - | 30.1 | 53 | 1 | 1¾ | 8 | > 24 |

**Claims**

1. A surface coating composition comprising a film-forming material, a volatile organic solvent and a reactive solvent and/or diluent characterized in that the comprises one or more ether-esters of the formula:

$$(R^1\text{-COO})_a\text{—}\underset{}{\overset{(OH)_c}{\overset{|}{R}}}\text{—}(OCH_2-CH=CH_2)_b$$

in which

R is a polyvalent hydrocarbyl group;

$R^1$ is an ethylenically unsaturated hydrocarbyl group containing from 18 to 24 carbon atoms; and

a, b and c are each integers such that the total of a, b and c is from 3 to 6, a and b are each at least 1 and the total of a and b is at least 3.

2. A composition as claimed in claim 1 in which R is a polyvalent aliphatic group.

3. A composition as claimed in claim 1 or claim 2 containing from 5 to 30% by weight of reactive diluent.